# EUROPÄISCHE PATENTSCHRIFT

(11) **EP 2 690 221 B1**
(45) Veröffentlichungstag und Bekanntmachung des Hinweises auf die Patenterteilung: **11.03.2015**
(21) Anmeldenummer: 13177869.8
(22) Anmeldetag: 24.07.2013
(51) Int. Cl.: E02B 17/00

(54) **Tragstruktur für Offshore-Anlagen**
Support structure for offshore assemblies
Structure porteuse pour installations offshore

(30) Priorität: 26.07.2012 DE 102012213215; 10.10.2012 DE 202012009678 U
(43) Veröffentlichungstag der Anmeldung: 29.01.2014
(73) Patentinhaber: Maritime Offshore Group GmbH, 28355 Bremen (DE)
(72) Erfinder: Reales, Emilio, 28355 Bremen (DE)
(74) Vertreter: Eisenführ Speiser

(56) Entgegenhaltungen:
- EP-A2- 2 067 914

## Beschreibung

Die vorliegende Erfindung betrifft eine Tragstruktur für Offshore-Anlagen, insbesondere für Windenergieanlagen, nach dem Oberbegriff von Anspruch 1. Derartige Tragstrukturen oder Fundamente dienen dazu, Windenergieanlagen auf dem Meeresgrund sicher zu verankern.

Seit einiger Zeit werden Windenergieanlagen nicht nur "On-Shore", also an Land, sondern verstärkt auf dem Meer "Offshore" installiert, beispielsweise in sogenannten Offshore-Windparks in der Nord- und Ostsee. Die Offshore-Windenergieanlagen sind extremen Bedingungen ausgesetzt. Sie werden beispielsweise in 20 bis 60 Metern Meerestiefe mit Hilfe eines Fundaments verankert. Das Fundament, welches auch als Tragstruktur bezeichnet werden kann, ist hohen mechanischen und chemischen Belastungen sowie Meeresströmungen ausgesetzt. Verschiedene Typen von Offshore-Fundamenten sind bekannt, beispielsweise Monopile-, Jacket-, Tripod-, Tripile- oder Bucket-Konstruktionen. Die vorliegende Erfindung betrifft in erster Linie eine sogenannte Jacket-Konstruktion. Diese ist eine Fachwerkkonstruktion aus Stahl.

Eine derartige Tragstruktur ist beispielsweise in DE 20 2011 101 599 U1 der hiesigen Anmelderin offenbart. Die dort offenbarte Tragstruktur weist mehrere, vorzugsweise sechs im Meeresgrund verankerte, insbesondere rohrförmige Pfähle und eine mit den Pfählen verbindbare, aus einer Vielzahl von Stäben, insbesondere Stahlrohren, zusammengesetzte Stabwerkstruktur auf. Die einzelnen Stäbe der Stabwerkstruktur sind mittels verschiedener Knoten, wie beispielsweise Kreuzknoten, Mittelknoten und Fußknoten, miteinander verbunden.

Eine weitere Tragstruktur ist in US 5,536,117 offenbart. Die offenbarte Tragstruktur weist übereinanderliegende und miteinander verbundene Segmente auf, wobei mindestens eines der Segmente zu einem nächsten Segment um eine vertikale Achse verdreht angeordnet ist. Die Anzahl und die Orientierung der Segmente ist abhängig von den äußeren Bedingungen, wie z. B. der Wassertiefe oder dem Standort der Tragstruktur. Die einzelnen Segmente der offenbarten Tragstruktur bestehen vorzugsweise aus vertikalen Außenstreben, die mit horizontal und/oder schräg ausgerichteten Querstreben miteinander verbunden sind. Die Verbindung zwischen den Streben wird vorzugsweise durch Montagestifte realisiert.

Aus EP 2 067 914 ist eine sich aus einer Gitterstruktur bildende Gründungsstruktur für Offshore-Bauwerke bekannt. Die Gitterstruktur weist im Winkel zwischen 0° und 30° gegenüber einer vertikalen geneigte Streben auf in den Kanten bzw. Eckbereichen der Eckstruktur auf. Die Streben sind aus in Längsachse der Strebe versetzten Einzelstreben und zwischen den Einzelstreben angeordneten Knotenpunkten zusammengesetzt.

Die bekannten Lösungen für derartige Offshore Tragstrukturen bedingen zur Gewährleistung einer hohen Tragfähigkeit einen hohen Material- und Fertigungsaufwand. Die Streben- bzw. Rohranordnungen der bekannten Tragstrukturen und die hohen Wandstärken der verwendeten Streben bzw. Rohre führen zu einem hohen Schweißaufwand und einem großen Bedarf an Arbeitskräften. Außerdem kommt es durch den erhöhten Materialeinsatz zu einem gesteigerten Gewicht der Tragstruktur, welches nicht nur die Montage sondern auch den Transport und die Installation auf dem offenen Meer negativ beeinflusst. Um Offshore Tragstrukturen mit immer höherer Tragfähigkeit wirtschaftlich bereitstellen zu können bedarf es folglich einer neuen Lösung, die den steigenden Anforderungen der schnell wachsenden Offshore Industrie gerecht wird.

Andere Offshore-Fundamente wie beispielsweise Monopile-Fundamente verursachen bei ihrer Installation auf dem Meeresgrund durch die Verwendung von leistungsstarken Rammhämmern extreme Schallemissionen mit einer Stärke von bis zu 190 dB. Derartige Schallwellen stellen für Lebewesen eine erhebliche Gefährdung dar und können sogar tödliche Folge für die betroffenen Meerestiere haben.

Außerdem kommt es bevorzugt bei Monopile Fundamenten durch die von der Windkraftanlage hervorgerufenen Schwingungen oftmals zu Rissen im Meeresboden. Diese Risse beeinträchtigen die Bodenintegrität und bedingen im Laufe der Zeit ein erhöhtes Risiko einer Fundamentschräglage, deren Behebung einen beträchtlichen finanziellen Aufwand bedeuten würde.

Aufgabe der vorliegenden Erfindung ist es folglich, eine Tragstruktur für Offshore-Anlagen, insbesondere Windenergieanlagen, anzugeben, die mit relativ geringem Aufwand herstellbar ist und trotz geringen Gewichts und einfacher Herstellbarkeit eine hohe Tragfähigkeit aufweist.

Die Erfindung löst die Aufgabe mittels einer am Meeresgrund verankerten Tragstruktur gemäß Anspruch 1, die zur Aufnahme von Offshore-Anlagen, wie beispielsweise Windenergieanlagen, Verwendung findet. Die erfindungsgemäße Tragstruktur besteht aus einer Vielzahl von miteinander verbundenen Streben, wobei mindestens zwei Streben im Wesentlichen parallel zueinander angeordnet sind. Die mindestens zwei im Wesentlichen parallel zueinander angeordneten Streben sind im Wesentlichen vertikal oder in einem Winkel zwischen 0 Grad und 30 Grad gegenüber einer Vertikalen nach innen geneigt, angeordnet. Durch eine derartige Ausrichtung können die Streben hohe Normalkräfte aufnehmen und somit das Eigengewicht z.B. einer montierten Windenergieanlage gegen den Meeresboden abstützen. Die im Wesentlichen parallel zueinander angeordneten Streben sind aus mehreren in Richtung einer Längsachse versetzten Einzelstreben zusammengesetzt.

In einer ersten bevorzugten Ausführungsform weisen die miteinander verbundenen Streben eine im Wesentlichen fachwerkartige Struktur auf. Neben den mindestens zwei im Wesentlichen parallel zueinander angeordneten Streben, die im Wesentlichen vertikal oder in einem Winkel zwischen 0 Grad und 30 Grad gegenüber einer Vertikalen nach innen geneigt sind, weist die erfindungsgemäße Tragstruktur weitere Streben auf, die in ihrer Gesamtheit derart verbunden und angeordnet sind, dass diese eine Fachwerkstruktur bilden.

In einer zweiten bevorzugten Ausführungsform sind die parallel zueinander angeordneten Streben aus zwei, drei oder vier, in Richtung einer Längsachse versetzten Einzelstreben zusammengesetzt. Die parallel zueinander angeordneten Streben können jeweils beispielsweise aus mehreren miteinander verschweißten Rohrabschnitten bestehen. Ferner können die fluchtend ausgerichteten Einzelstreben auch über Rohrzwischenstücke, die in eine andere Richtung ausgerichtet sind, verbunden sein. Die Einzelstreben können sich dabei in Form, Material, Wandstärke und/oder Querschnitt voneinander unterscheiden.

In einer weiteren besonders bevorzugten Ausführungsform bilden jeweils zwei parallel zueinander angeordnete Streben ein Streben-Paar. Durch das paarweise Anordnen der Streben können auch Streben mit geringen Wandstärken für Offshore Tragstrukturen verwendet werden. Dadurch, dass dünnwandige Rohre wesentlich kostengünstiger und auch in größeren Längen im Vergleich zu dickwandigen Rohren verfügbar sind, werden durch den Einsatz von Doppel-Streben einerseits die aufnehmbaren Lasten nicht beeinflusst, die Herstellungskosten einer Tragstruktur andrerseits jedoch erheblich gesenkt.

In einer besonders vorteilhaften Weiterbildung der erfindungsgemäßen Tragstruktur weist ein Streben-Paar im Wesentlichen die gleiche Länge wie die Tragstruktur auf. Das Streben-Paar kann dabei aus mehreren miteinander verbundenen Einzelstreben ausgebildet sein.

In einer weiteren bevorzugten Ausführungsform weist die Tragstruktur mehrere im Außenbereich gleichmäßig über den Umfang angeordnete Streben-Paare auf. Die Tragstruktur kann dabei sowohl einen eckigen, beispielsweise einen dreieckigen, quadratischen, fünfeckigen oder sechseckigen, als auch einen kreisrunden Querschnitt aufweisen. Durch einen derartigen Tragstrukturaufbau können eingeleitete Kräfte besonders vorteilhaft über die Streben der Tragstruktur am Meeresboden abgestützt werden. Die gleichmäßige Kraftverteilung auf die Streben-Paare erlaubt die Verwendung gleicher Streben für die Gesamtheit der Streben-Paare.

Ferner ist eine Ausführungsform bevorzugt bei der jeweils ein Streben-Paar an jeder Außenkante der Tragstruktur angeordnet ist. Bei der Ansicht des Querschnitts der Tragstruktur ist dabei folglich in jeder Ecke ein Streben-Paar angeordnet. Dabei kann die Tragstruktur eine mehreckige Außenkontur aufweisen, vorzugsweise ist diese als Tragstruktur mit quadratischer, drei-, fünf- oder sechseckiger Grundfläche ausgeführt.

Die erfindungsgemäße Tragstruktur wird ferner dadurch vorteilhaft weitergebildet, dass die zwei im Wesentlichen parallel zueinander angeordneten Streben eines Streben-Paares mittels einer oder mehrerer im Wesentlichen horizontal angeordneter Verbindungsstreben verbindbar sind. Die Verbindungsstreben sind dabei beispielsweise kurze Rohrabschnitte, die an ihren Stirnseiten mit jeweils einer Strebe eines Streben-Paares verschweißt werden. Somit werden die Streben eines Streben-Paares miteinander verbunden und gleichzeitig zueinander ausgerichtet. Die Anzahl der Verbindungsstreben zwischen den Streben eines Streben-Paares ist abhängig von den verwendeten Streben und der Höhe der Tragstruktur.

In einer weiteren bevorzugten Ausführungsform weisen die horizontal verlaufenden Verbindungsstreben eine Krümmung um die vertikale Mittel-Achse der Tragstruktur auf. Diese Krümmung kann beispielsweise durch das Fügen, z.B. Verschweißen, von zwei abgeschrägten Stirnseiten erreicht werden, sodass die Verbindungsstreben eine ausgeprägte Fügekante aufweisen. Ferner ist eine derartige Rohrkrümmung auch durch verschiedene Umformverfahren herstellbar. Die mittels Umformverfahren hergestellten Verbindungsstreben weisen vorzugsweise keine ausgeprägte Fügekante auf sondern realisieren die Krümmung durch einen im Wesentlichen kreisrund gebogenen Strebenabschnitt.

Bei einer Tragstruktur, die einen runden Querschnitt bzw. eine runde Außenkontur aufweist, besitzen die Verbindungsstreben vorzugsweise den gleichen Krümmungsradius, den die Tragstruktur auf der Höhe aufweist, auf der die entsprechenden Verbindungsstreben angeordnet sind.

In einer weiteren bevorzugten Ausführungsform weisen die horizontal verlaufenden Verbindungsstreben eine Krümmung von 120 Grad, 90 Grad, 72 Grad oder 60 Grad um die vertikale Mittel-Achse der Tragstruktur auf.

Besonders bevorzugt ist eine Ausführungsvariante der erfindungsgemäßen Tragstruktur die drei, vier, fünf oder sechs Streben-Paaren aufweist. Diese sind vorzugsweise gleichmäßig über den peripheren Umfang der Tragstruktur angeordnet. Durch die gleichmäßige Verteilung über den peripheren Umfang sind die Streben-Paare, abhängig von der verwendeten Anzahl, jeweils 120 Grad, 90 Grad, 72 Grad oder 60 Grad um die vertikale Mittel-Achse der Tragstruktur versetzt angeordnet.

In einer weiteren bevorzugten Weiterbildung der erfindungsgemäßen Tragstruktur sind die Streben-Paare durch im Wesentlichen horizontal verlaufende Streben verbunden. Die horizontalen Streben verbinden vorzugsweise nebeneinanderliegende Streben-Paare. Bei Tragstrukturen mit einer eckigen Grundform sind diese horizontal verlaufenden Streben als gerade, nicht-gebogene Streben ausgeführt, wobei bei Tragstrukturen mit einer runden Grundform diese horizontalen Streben vorzugsweise gekrümmt ausgeführt sind. Der Krümmungsradius ist in diesem Fall abhängig von den Gesamtausmaßen der Tragstruktur und von der Höhe, in der die horizontalen Streben angeordnet sind. Sie dienen zur Stabilisierung der Tragstruktur und nehmen im Wesentlichen horizontalwirkende Kräfte auf. Bei der Abstützung der eingeleiteten Lasten gegen den Meeresboden spielen die horizontalen Längsstreben eine untergeordnete Rolle.

In einer besonders bevorzugten Ausführungsform bilden die in einer gemeinsamen Ebene angeordneten Verbindungsstreben und die in der gleichen Ebene angeordneten im Wesentlichen horizontal verlaufenden Streben eine im Wesentlichen horizontale Ringstruktur aus. Die Ringstruktur erstreckt sich über den gesamten Umfang der Tragstruktur und leistet einen wesentlichen Beitrag zur Stabilität der Tragstruktur. Eine Tragstruktur weist, abhängig von ihrer Größe bzw. Höhe, zwei, drei oder vier derartige Ringstrukturen auf.

Die erfindungsgemäße Tragstruktur wird dadurch weitergebildet, dass die Streben als Rohre, vorzugsweise Hohlrohre aus Stahl, ausgeführt sind.

In einer weiteren bevorzugten Ausführungsform weist die Tragstruktur mehrere, vorzugsweise ein, zwei, drei oder vier, übereinanderliegende Segmente auf. Die Segmente sind dabei durch die Ringstrukturen in vertikaler Richtung begrenzt. Die einzelnen Segmente beinhalten folglich verschiedene Abschnitte der Streben-Paare. Die im Wesentlichen vertikal verlaufenden parallelen Einzelrohre, aus denen die Streben-Paare zusammengesetzt sind, weisen vorzugsweise eine Länge auf, die dem Abstand zwischen den zwei Ringstrukturen entspricht, zwischen denen das jeweilige Einzelrohr angeordnet ist.

In einer weiteren bevorzugten Ausführungsform sind die Streben-Paare durch im Wesentlichen diagonal verlaufende Diagonalstreben verbindbar. Als diagonal können hierbei alle Strebenausrichtungen angesehen werden, die zwischen einer horizontalen und einer vertikalen Strebenausrichtung realisierbar sind. Die Diagonalstreben verleihen der Tragstruktur ihre strukturelle Stabilität. Dabei nehmen die Diagonalstreben im Vergleich zu den Streben-Paaren lediglich kleine Kräfte auf.

In einer weiteren bevorzugten Ausführungsform sind Diagonalstreben in einem X-Muster gekreuzt. Die in einem X-Muster angeordneten Diagonalstreben sind zwischen zwei auf der gleichen Seite angeordneten benachbarten Streben verschiedener Streben-Paare angeordnet. Eine Tragstruktur weist auf jeder Seite mehrere, vorzugsweise zwei, drei, vier oder fünf, X-Muster-Strukturen auf. Durch die vorzugsweise kegelstumpfartige Außenkontur der Tragstruktur werden die X-Muster-Strukturen vom unteren Ende zum oberen Ende der Tragstruktur kleiner.

In einer weiteren bevorzugten Ausführungsform sind an der untersten Ringstruktur mehrere, vorzugsweise drei, vier, fünf oder sechs, im Wesentlichen parallel zueinander angeordnete Fußelemente angeordnet. Jedes Fußelement der Tragstruktur ist dabei mit einem im Meeresboden verankerten Pfahl verbindbar. Durch die Verbindung mit den im Meeresboden verankerten Pfählen wird die Tragstruktur eindeutig ausgerichtet und stabil auf dem Meeresboden fixiert. Durch die Verwendung mehrerer solcher Pfähle können diese kürzer als beispielsweise bei Monopiles ausgeführt werden. Ebenfalls bedarf es einer geringeren Einbringtiefe in den Meeresboden. Dies macht den Einsatz von Schallintensiven Rammhämmern überflüssig und erlaubt eine Pfahlinstallation durch Vibrationsgeräte. Die wesentlich geringeren Schallemissionen bedeuten auch einen geminderten Eingriff in den Lebensraum der von der Tragstrukturmontage betroffenen Meerestiere.

In einer weiteren bevorzugten Ausführungsform sind die Streben der Tragstruktur als HFI (Hochfrequenz-Induktionsschweißen-) Rohre und/oder MSH (Mannesmann Stahlbau Hohlprofil-) Rohre ausgeführt. Diese Rohre bieten sich durch eine ausreichende Tragfähig und einen niedrigen Preis für den Einsatz als Streben der Tragstruktur an.

Besonders bevorzugt ist es, die Streben, die beispielsweise als Stahl-Rohre ausgeführt sind, mittels Orbitalschweißen miteinander zu fügen. Orbitalschweißen ist ein Verfahren, das sich besonders gut dazu eignet derartige Rohrstrukturen miteinander zu verbinden. Dadurch ist die Wirtschaftlichkeit der Produktion der Tragstruktur weiter verbessert, wodurch Kosten reduziert werden. Ferner lassen sich mit Orbitalschweißen auf einfache Art und Weise Schweißnähte von hoher Güte erzeugen, wodurch die Lebensdauer und die Tragfähigkeit der Tragstruktur verbessert werden.

Besonders bevorzugt ist eine Ausführungsform der erfindungsgemäßen Tragstruktur, die eine Schnittstelle zur Montage eines Turms einer Windenergieanlage aufweist. Diese Schnittstelle stellt eine Montageplattform dar und verteilt die auf die Tragstruktur wirkenden Lasten vorzugsweise zu gleichen Teilen auf die verschiedenen Streben-Paare.

Gemäß einer weiteren Ausführungsform ist es bevorzugt, dass die Rohre eine Wanddicke von bis zu etwa 30 mm, vorzugsweise etwa im Bereich von 25,4 mm aufweisen und/oder im Warmbreitbandverfahren hergestellt sind. Derartige Wanddicken eignen sich besonders gut für die Tragstruktur. Sie bieten eine ausreichende Stabilität ohne unnötig hohen Materialverbrauch zu erzeugen. Dadurch werden auch die Kosten gesenkt. Ferner ist ein Warmbreitbandverfahren eine einfache Möglichkeit derartige Rohre herzustellen.

In einer weiteren bevorzugten Ausführungsform der erfindungsgemäßen Tragstruktur sind die Streben wenigstens teilweise mit einem Überzug beschichtet. Der Überzug ist vorzugsweise als Kunststoffüberzug ausgeführt und wirkt der Alterung und Zersetzung der Streben entgegen. Sind die Streben als verschweißte Stahlrohre ausgeführt, setzt durch die korrosionsfördernde Umgebung bei unbeschichteten Rohren und Schweißnähten schnell ein Zersetzungsprozess ein, dem, zur Gewährleistung der Tragfähigkeit der Tragstruktur, entgegengewirkt werden muss. Beschichtungen auf Polyurethan- und Epoxidharz-Basis haben sich für den Einsatz für Offshore Tragstrukturen bewährt und wirken dem Korrosionsprozess effektiv entgegen.

Die Erfindung wird nachfolgend anhand von Figuren näher beschrieben, ohne dass diese den Schutzbereich der Schutzansprüche beschränken sollen. Es stellen dar:
- Fig. 1:: perspektivische Ansicht auf ein erstes Ausführungsbeispiel der erfindungsgemäßen Tragstruktur;
- Fig. 2:: perspektivische Ansicht auf ein zweites Ausführungsbeispiel der erfindungsgemäßen Tragstruktur;
- Fig. 3:: Explosionsdarstellung des zweiten Ausführungsbeispiels der erfindungsgemäßen Tragstruktur;
- Fig. 4:: Explosionsdarstellung eines dritten Ausführungsbeispiels der erfindungsgemäßen Tragstruktur; und
- Fig. 5:: perspektivische Ansicht auf ein viertes Ausführungsbeispiel der erfindungsgemäßen Tragstruktur;

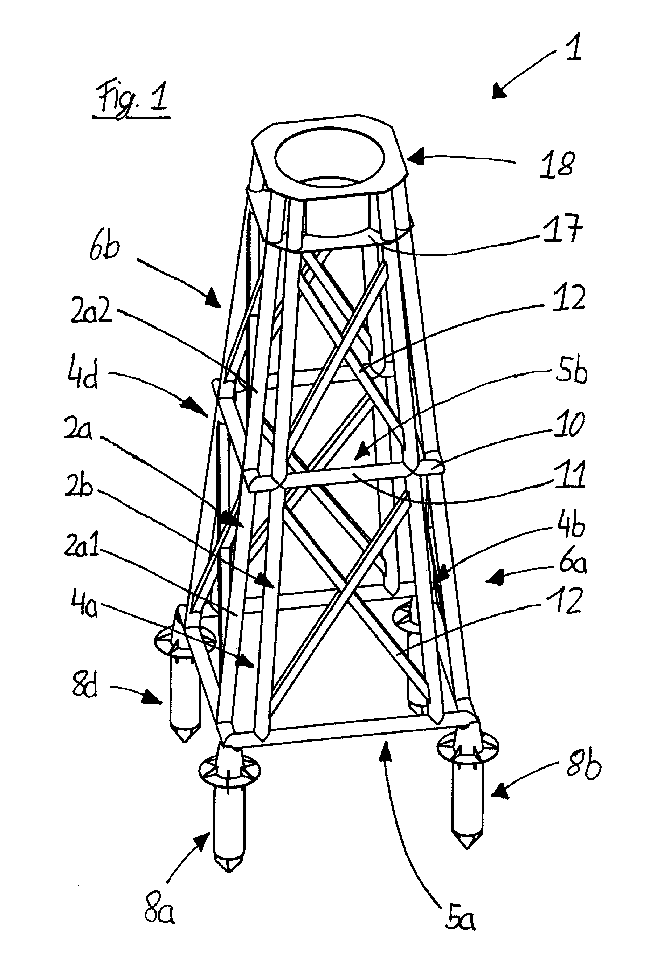

Figur 1 zeigt eine perspektivische Ansicht eines ersten Ausführungsbeispiels der erfindungsgemäßen Tragstruktur (1). Die Tragstruktur (1) weist eine quadratische Grundfläche auf, deren Breite vom unteren Ende bis zum oberen Ende der Tragstruktur (1) konstant abnimmt. An den vier Außenkanten der Tragstruktur (1) sind jeweils zwei parallel zueinander ausgerichtete Streben (2a, 2b) angeordnet. Die zwei parallel zueinander ausgerichteten Streben (2a, 2b) sind dabei aus jeweils zwei in Richtung einer Längsachse versetzen Einzelstreben (2a1, 2a2) zusammengesetzt.

Die parallel zueinander ausgerichteten Streben (2a, 2b) bilden an jeder der vier Außenkanten der Tragstruktur (1) ein Streben-Paar (4a, 4b, 4c, 4d) aus. Die vier Streben-Paare (4a, 4b, 4c, 4d) sind durch die quadratische Grundfläche der Tragstruktur (1) gleichmäßig über den Umfang der Tragstruktur (1) angeordnet und weisen im Wesentlichen die gleiche Länge wie die Tragstruktur (1) auf.

Durch eine leichte Neigung der Streben (2a, 2b) bzw. der Streben-Paare (4a, 4b, 4c, 4d) in Richtung der vertikalen Mittelachse der Tragstruktur (1), die zwischen 0 Grad und 30 Grad betragen kann, wird eine sich nach oben verjüngende Außenkontur ausgebildet.

Die zueinander parallel ausgerichteten Streben (2a, 2b) der Streben-Paare (4a, 4b, 4c, 4d) sind an ihrem unteren Ende durch eine erste horizontale Ringstruktur (5a) begrenzt. Die Tragstruktur (1) weist etwa auf mittlerer Höhe der Streben (2a, 2b) eine zweite Ringstruktur (5b) auf. Die zweite horizontale Ringstruktur (5b) ist derart angeordnet, dass sie die Einzelstreben (2a1, 2a2) der zueinander parallel ausgerichteten Streben (2a, 2b) miteinander verbindet.

Die an der ersten Ringstruktur (5a) angeordneten Fußelemente (8a, 8b, 8c, 8d) werden an im Meeresboden verankerten Pfählen (nicht dargestellt) angeordnet, um die Tragstruktur (1) auf dem Meeresboden zu fixieren. Die Fußelemente (8a, 8b, 8c, 8d) sind dabei im Wesentlichen parallel zueinander angeordnet.

Die Ringstrukturen (5a, 5b) bestehen aus vier horizontalen Verbindungsstreben (10), die die parallel zueinander ausgerichteten und im Wesentlichen vertikal verlaufenden Streben (2a, 2b) der Streben-Paare (4a, 4b, 4c, 4d) miteinander verbinden, und vier im Wesentlichen horizontal verlaufenden Streben (11), die die einzelnen Streben-Paare (4a, 4b, 4c, 4d) miteinander verbinden. Die Verbindungsstreben (10) weisen eine Krümmung von 90 Grad um die horizontale Mittel-Achse der Tragstruktur (1) auf. Sie sind als rechtwinklig miteinander verschweißte Rohrabschnitte ausgeführt. Aufgrund der nach oben hin abnehmenden Grundfläche der Tragstruktur (1) schließt die erste Ringstruktur (5a) eine größere horizontale Fläche ein als die zweite Ringstruktur (5b).

Die Ringstrukturen (5a, 5b) und die Zwischenplatte (17) der Schnittstelle (18) zur Montage eines Turms einer Windenergieanlage unterteilen die Tragstruktur in zwei übereinander angeordnete Segmente (6a, 6b).

Die Diagonalstreben (12) sind in einer X-Muster-Struktur zwischen zwei Streben (2) zweier nebeneinanderliegender Streben-Paare (4a, 4b, 4c, 4d) und zwischen den zwei Ringstrukturen (5a, 5b) sowie zwischen der zweiten Ringstruktur (5b) und der Zwischenplatte (17) der Schnittstelle (18) zur Montage eines Turm einer Windenergieanlage angeordnet. Während die X-Muster-Strukturen der Tragstruktur (1) einen rechteckigen Querschnitt aufweisen, sind die Verbindungsstreben (10), die horizontal verlaufenden Streben (11) sowie die Einzelstreben (2a1, 2a2) der parallel verlaufenden Streben (2a, 2b) als kreisrunde Hohlrohre ausgeführt.

Alle Streben der Tragstruktur (1) können als HFI (Hochfrequenz-Induktionsschweißen-) Rohre und/oder MSH (Mannesmann Stahlbau Hohlprofil-) Rohre ausgeführt sein und besitzen eine Wandstärke bis 30 mm, vorzugsweise etwa im Bereich von 25,4 mm und/oder sind im Warmbreitbandverfahren hergestellt.

Am oberen Ende der Tragstruktur (1) ist eine Schnittstelle (18) zur Aufnahme eines Turms einer Windenergieanlage angeordnet. Die Schnittstelle (18) verteilt die vertikalen Lasten eines Windenergieanlagenturms gleichmäßig auf die vier Streben-Paare (4a, ab, 4c, 4d).

Durch die Kombination aus vertikal, horizontal und diagonal ausgerichteten und miteinander verbundenen Streben weist die Tragstruktur (1) eine fachwerkartige Struktur auf. Die verschiedenen Streben sind vornehmlich mittels Orbitalschweißen miteinander verschweißt.

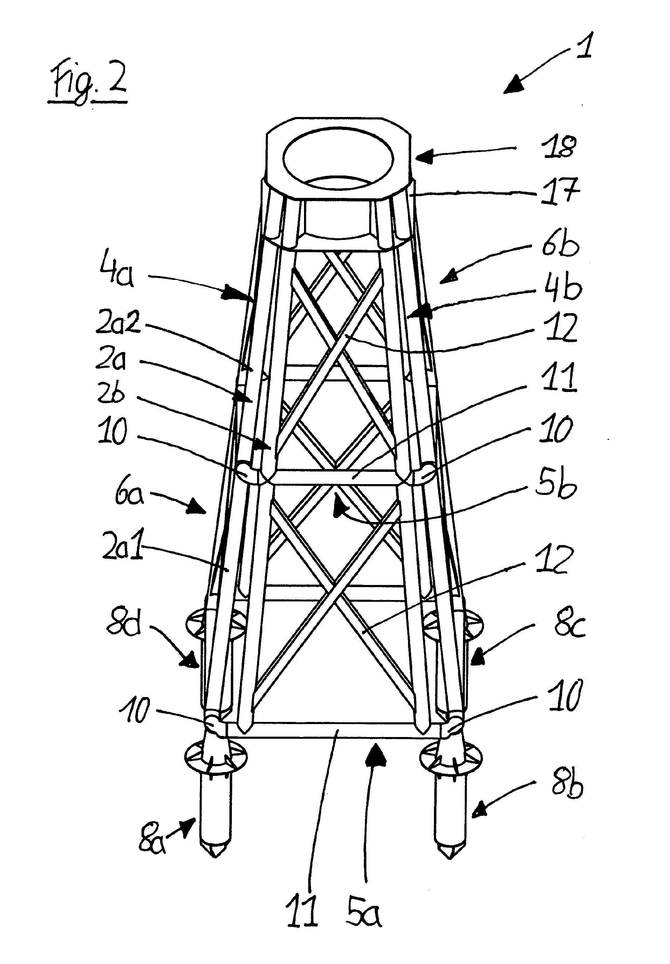

Figur 2 zeigt eine perspektivische Ansicht eines zweiten Ausführungsbeispiels der erfindungsgemäßen Tragstruktur (1). Das abgebildete Ausführungsbeispiels unterscheidet sich von dem in Figur 1 dargestellten Ausführungsbeispiel durch die abgerundeten Verbindungsstreben (10). Diese sind, anders als die eckigen Verbindungsstreben (10) aus Figur 1, nicht durch Verschweißen zweier Rohrabschnitte hergestellt sondern sind in einem Umformprozess aus einem gerade Rohrabschnitt gebogen worden.

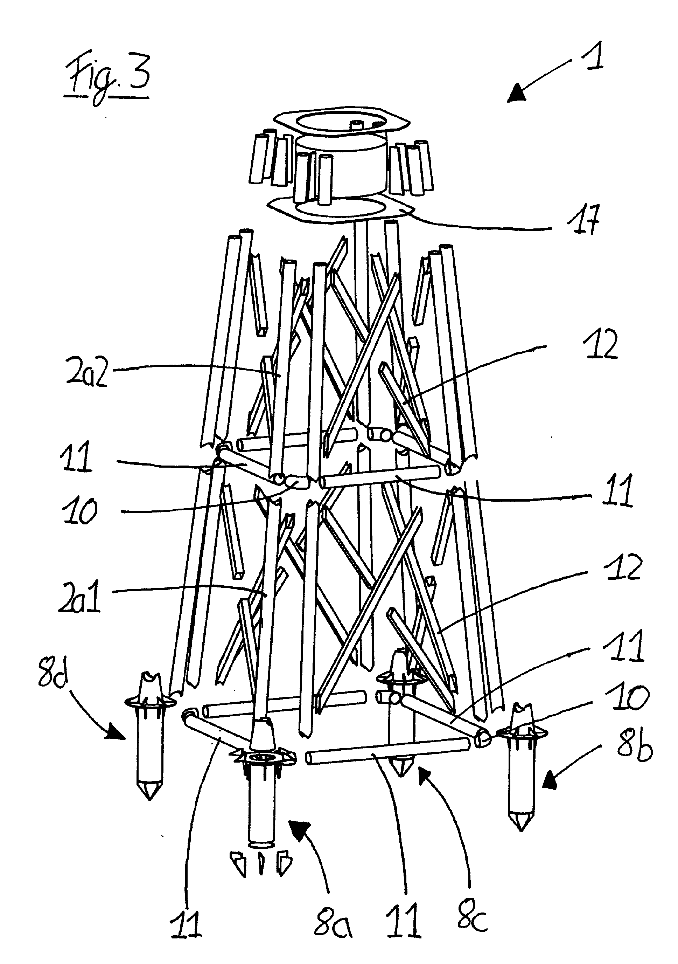

Figur 3 zeigt das in Figur 2 dargestellte Ausführungsbeispiel in einer Explosionsdarstellung. Die Darstellung zeigt weitere Details einzelnen Streben der Tragstruktur (1). Die unteren im Wesentlichen vertikal verlaufenden Einzelstreben (2a1) weisen an beiden Stirnseiten eine Kontur zur rechtwinkligen Anordnung an die horizontal verlaufenden Streben (11) der Ringstrukturen (5a, 5b) auf. Die darüber liegenden angeordneten Einzelstreben (2a2) weisen jeweils einseitig eine Kontur an ihren Stirnseiten auf.

Die X-Muster-Strukturen bestehen jeweils aus drei Diagonalstreben (12). Dabei weisen die beiden auf einer Längsachse angeordneten Diagonalstreben (12) die gleiche Länge auf.

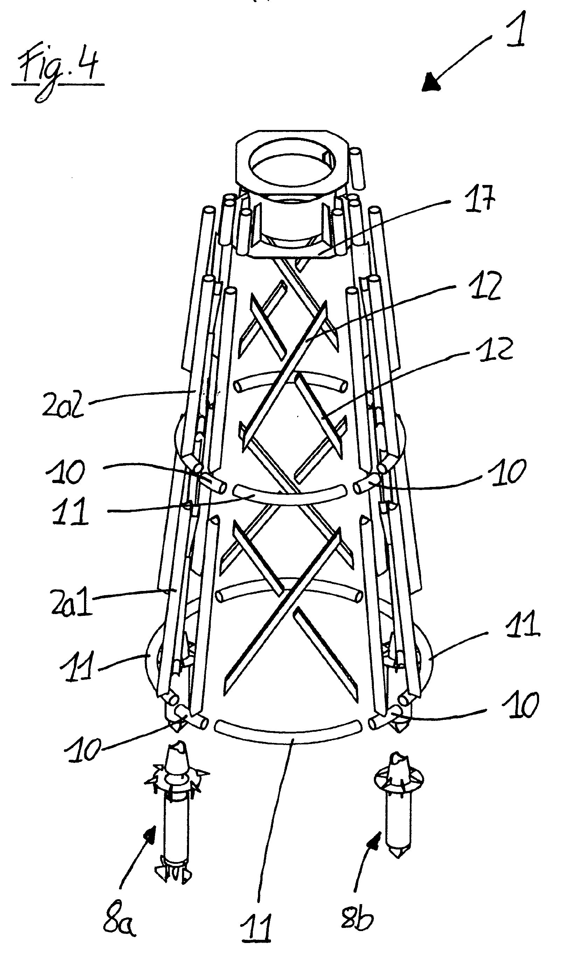

Figur 4 zeigt ein drittes Ausführungsbeispiel in einer Explosionsdarstellung. Sowohl die horizontalen Verbindungsstreben (10) als auch die horizontalen Streben (11) sind in diesem Ausführungsbeispiel als gekrümmte bzw. gebogene Rohre ausgeführt. Der Krümmungsradius der Verbindungsstreben (10) sowie der horizontalen Streben (11) bestimmt hierbei den Radius der beiden Ringstrukturen (5a, 5b). Der Krümmungsradius der Streben sowie der Radius der Ringstrukturen (5a, 5b) ist abhängig von den Gesamtausmaßen der Tragstruktur (1) und der Höhe, in der diese in der Tragstruktur (1) angeordnet sind. Analog zu den Ausmaßen der X-Muster-Strukturen nimmt die von den Ringstrukturen (5a, 5b) eingeschlossene horizontale Fläche von unten nach oben ab; es wird eine kegelstumpfartige Außenkontur ausgebildet.

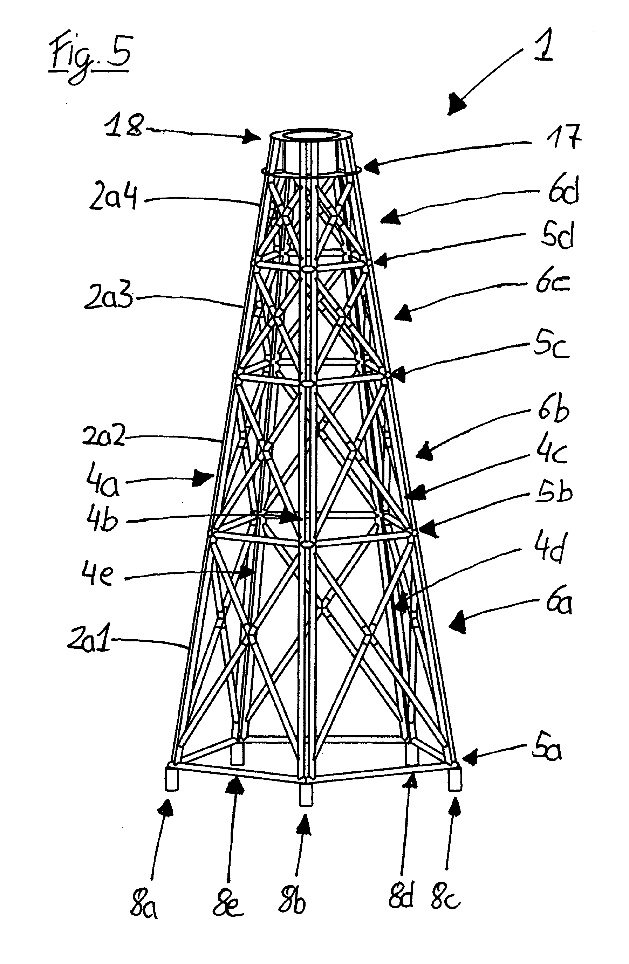

Figur 5 zeigt eine perspektivische Ansicht eines vierten Ausführungsbeispiels der erfindungsgemäßen Tragstruktur (1). Die Tragstruktur (1) weist vier übereinanderliegende Segmente (6a, 6b, 6c, 6d) auf, die durch horizontale Ringstrukturen (5b, 5c, 5d) voneinander getrennt sind. Sie werden bodenseitig durch die unterste Ringstruktur (5a) und kopfseitig durch das Zwischenblech (17) der Schnittstelle (18) zur Montage eines Turms einer Windenergieanlage begrenzt. Die Tragstruktur (1) weist eine fünfeckige Grundform bzw. einen fünfeckigen Querschnitt auf. Die fünfeckige Form bedingt, dass jede Ringstruktur (5a, 5b, 5c, 5d) fünf horizontale Verbindungselemente (10) und fünf horizontale Streben (11) aufweist. Analog hierzu sind an der untersten Ringstruktur (5a) fünf Fußelemente (8a, 8b, 8c, 8d, 8e) angeordnet. Die parallel zueinander ausgerichteten Streben der fünf Streben-Paare (4a, 4b, 4c, 4d, 4e) bestehen jeweils aus vier Einzelstreben (2a1, 2a2, 2a3, 2a4), die über die horizontalen Ringstrukturen (5b, 5c, 5d) miteinander verbunden sind.

In der Figurenbeschreibung sowie in der Figurendarstellung werden die folgenden Bezugsziffern verwendet:
- 1: Tragstruktur
- 2a, 2b: Streben eines Streben-Paares
- 2a1, 2a2, 2a3, 2a4: Einzelstreben
- 4a, 4b, 4c, 4d, 4e: Streben-Paare
- 5a, 5b, 5c, 5d: Ringstrukturen
- 6a, 6b, 6c, 6d: Segmente
- 8a, 8b, 8c, 8d, 8e: Fußelemente
- 10: Verbindungsstreben
- 11: horizontal verlaufende Streben
- 12: Diagonalstreben
- 17: Zwischenplatte der Schnittstelle (18)
- 18: Schnittstelle zur Montage eines Turm einer Windenergieanlage

## Patentansprüche

1. Tragstruktur (1) für Offshore-Anlagen, insbesondere Windenergieanlagen, zur Verankerung am Meeresboden aus einer Vielzahl von miteinander verbundenen Streben, wobei mindestens zwei im Wesentlichen vertikale oder in einem Winkel von 0 Grad bis 30 Grad gegenüber einer Vertikalen geneigte Streben (2a, 2b) im Wesentlichen parallel zueinander angeordnet sind,
**dadurch gekennzeichnet, dass** die im Wesentlichen parallel zueinander angeordneten Streben (2a, 2b) aus mehreren in Richtung einer Längsachse versetzten Einzelstreben (2a1, 2a2, 2a3, 2a4) zusammengesetzt sind.

2. Tragstruktur (1) nach Anspruch 1,
**dadurch gekennzeichnet, dass** die miteinander verbundenen Streben eine im Wesentlichen fachwerkartige Struktur aufweisen.

3. Tragstruktur (1) nach Anspruch 1 oder 2,
**dadurch gekennzeichnet, dass** die im Wesentlichen parallel zueinander angeordneten Streben (2a, 2b) aus zwei, drei oder vier in Richtung einer Längsachse versetzten Einzelstreben (2a1, 2a2, 2a3, 2a4) zusammengesetzt sind.

4. Tragstruktur (1) nach einem der vorstehenden Ansprüche,
**dadurch gekennzeichnet, dass** jeweils zwei im Wesentlichen parallel zueinander angeordnete Streben (2a, 2b) ein Streben-Paar (4a, 4b, 4c, 4d, 4e) bilden.

5. Tragstruktur (1) Anspruch 4,
**dadurch gekennzeichnet, dass** ein Streben-Paar (4a, 4b, 4c, 4d, 4e) die im Wesentlichen gleiche Länge wie die Tragstruktur (1) aufweist; und/oder
die Tragstruktur (1) mehrere, vorzugsweise drei, vier, fünf oder sechs, im Außenbereich gleichmäßig über den Umfang angeordnete Streben-Paare (4a, 4b, 4c, 4d, 4e) aufweist; und/oder
die Tragstruktur (1) vorzugsweise an jeder Außenkante ein Streben-Paar (4a, 4b, 4c, 4d, 4e) aufweist.

6. Tragstruktur (1) nach einem der Ansprüche 4,
**dadurch gekennzeichnet, dass** die zwei im Wesentlichen parallel zueinander angeordneten Streben (2a, 2b) eines Streben-Paares (4a, 4b, 4c, 4d, 4e) mittels einer oder mehrerer im Wesentlichen horizontal angeordneter Verbindungsstreben (10) verbindbar sind.

7. Tragstruktur (1) nach Anspruch 6,
**dadurch gekennzeichnet, dass** die horizontal verlaufenden Verbindungsstreben (10) eine Krümmung um die vertikale Mittel-Achse der Tragstruktur (1) aufweisen; und/oder die horizontal verlaufenden Verbindungsstreben (10) eine Krümmung von 120 Grad, 90 Grad, 72 Grad oder 60 Grad um die vertikale Mittel-Achse der Tragstruktur (1) aufweisen.

8. Tragstruktur (1) nach einem der Ansprüche 4 bis 7,
**dadurch gekennzeichnet, dass** die Tragstruktur (1) mehrere, vorzugsweise drei, vier, fünf oder sechs, Streben-Paare (4a, 4b, 4c, 4d, 4e) aufweist.

9. Tragstruktur (1) nach einem der Ansprüche 4 bis 8,
**dadurch gekennzeichnet, dass** die Streben-Paare (4a, 4b, 4c, 4d, 4e) durch im Wesentlichen horizontal verlaufende Streben (11) verbindbar sind.

10. Tragstruktur (1) nach Anspruch 9,
**dadurch gekennzeichnet, dass** die in einer gemeinsamen Ebene angeordneten Verbindungsstreben (10) und die in der gleichen Ebene angeordneten im Wesentlichen horizontal verlaufenden Streben (11) eine im Wesentlichen horizontale Ringstruktur (5a, 5b, 5c, 5d) bilden.

11. Tragstruktur (1) nach einem der vorstehenden Ansprüche,
**dadurch gekennzeichnet, dass** die Streben als Rohre ausgeführt sind.

12. Tragstruktur (1) nach Anspruch 10 oder 11,
**dadurch gekennzeichnet, dass** die Tragstruktur (1) mehrere, vorzugsweise ein, zwei, drei oder vier, übereinanderliegende Segmente (6a, 6b, 6c, 6d) aufweist, die durch die Ringstrukturen (5a, 5b, 5c, 5d) in vertikaler Richtung begrenzt werden.

13. Tragstruktur (1) nach einem der Ansprüche 4 bis 12,
**dadurch gekennzeichnet, dass** die Streben-Paare (4a, 4b, 4c, 4d, 4e) durch im Wesentlichen diagonal verlaufende Diagonalstreben (12) verbindbar sind.

14. Tragstruktur (1) nach Anspruch 13,
**dadurch gekennzeichnet, dass** zwei in einem X-Muster gekreuzte Diagonalstreben (12) zwischen zwei auf einer Seite der Tragstruktur (1) angeordneten benachbarten horizontal verlaufenden Streben (11) und/oder zwei auf der gleichen Seite angeordneten benachbarten Streben (2) verschiedener Streben-Paare (4a, 4b, 4c, 4d, 4e) anordenbar sind.

15. Tragstruktur (1) nach einem der vorstehenden Ansprüche,
**gekennzeichnet durch** mehrere, vorzugsweise drei, vier, fünf oder sechs, am Meeresgrund verankerbare mit der untersten Ringstruktur (5a) verbindbare im Wesentlichen parallel zueinander angeordnete Fußelemente (8a, 8b, 8c, 8d, 8e); und/oder die Streben der Tragstruktur (1) als HFI (Hochfrequenz-Induktionsschweißen-) Rohre und/oder MSH (Mannesmann Stahlbau Hohlprofil-)Rohre ausgeführt sind; und/oder die Streben mittels Orbitalschweißen miteinander verbindbar sind; und/oder die Tragstruktur (1) eine Schnittstelle (18) zur Montage eines Turms einer Windenergieanlage aufweist; und/oder
die Streben eine Wanddicke von bis zu etwa 30 mm, vorzugsweise etwa im Bereich von 25,4 mm aufweisen und/oder im Warmbreitbandverfahren hergestellt sind; und/oder die Rohre wenigstens teilweise mit einem Überzug beschichtet sind, insbesondere mit einem Kunststoff beschichtet sind.

## Claims

1. A supporting structure (1) for offshore installations, in particular wind energy installations, which is for anchoring to the sea bed and is composed of a plurality of struts connected to one another, wherein at least two struts (2a, 2b), substantially vertical or inclined at an angle from 0 degrees to 30 degrees to a vertical, are arranged substantially parallel to one another, **characterized in that** the struts (2a, 2b) arranged substantially parallel to one another are assembled from a plurality of individual struts (2a1, 2a2, 2a3, 2a4) shifted in the direction of a longitudinal axis.

2. A supporting structure (1) according to claim 1,
**characterized in that** the struts connected to one another have a substantially latticework-like structure.

3. A supporting structure (1) according to claim 1 or 2,
**characterized in that** the struts (2a, 2b) arranged substantially parallel to one another are assembled from two, three or four individual struts (2a1, 2a2, 2a3, 2a4) shifted in the direction of a longitudinal axis.

4. A supporting structure (1) according to any one of the preceding claims,
**characterized in that** in each case two struts (2a, 2b) arranged substantially parallel to one another form a strut pair (4a, 4b, 4c, 4d, 4e).

5. A supporting structure (1) [according to] claim 4,
**characterized in that** a strut pair (4a, 4b, 4c, 4d, 4e) has substantially the same length as the supporting structure (1); and/or
the supporting structure (1) has a plurality of strut pairs (4a, 4b, 4c, 4d, 4e), preferably three, four, five or six, arranged uniformly over the circumference in the outer region; and/or
the supporting structure (1) preferably has a strut pair (4a, 4b, 4c, 4d, 4e) on each outer edge.

6. A supporting structure (1) according to any one of claims 4 [sic],
**characterized in that** the two struts (2a, 2b), arranged substantially parallel to one another, of a strut pair (4a, 4b, 4c, 4d, 4e) are connectable by means of one or a plurality of connecting struts (10) arranged substantially horizontally.

7. A supporting structure (1) according to claim 6,
**characterized in that** the horizontally-running connecting struts (10) have a curvature about the vertical centre line of the supporting structure (1); and/or
the horizontally-running connecting struts (10) have a curvature of 120 degrees, 90 degrees, 72 degrees or 60 degrees about the vertical centre line of the supporting structure (1).

8. A supporting structure (1) according to any one of claims 4 to 7,
**characterized in that** the supporting structure (1) has a plurality of strut pairs (4a, 4b, 4c, 4d, 4e), preferably three, four, five or six.

9. A supporting structure (1) according to any one of claims 4 to 8,
**characterized in that** the strut pairs (4a, 4b, 4c, 4d, 4e) are connectable by struts (11) running substantially horizontally.

10. A supporting structure (1) according to claim 9,
**characterized in that** the connecting struts (10) arranged in a common plane and the substantially horizontally-running struts (11) arranged in the same plane form a substantially horizontal ring structure (5a, 5b, 5c, 5d).

11. A supporting structure (1) according to any one of the preceding claims,
**characterized in that** the struts are in the form of tubes.

12. A supporting structure (1) according to claim 10 or 11,
**characterized in that** the supporting structure (1) has a plurality of segments (6a, 6b, 6c, 6d) lying on top of one another, preferably one, two, three or four, which segments are bounded in a vertical direction by the ring structures (5a, 5b, 5c, 5d).

13. A supporting structure (1) according to any one of claims 4 to 12,
**characterized in that** the strut pairs (4a, 4b, 4c, 4d, 4e) are connectable by diagonal struts (12) running substantially diagonally.

14. A supporting structure (1) according to claim 13,
**characterized in that** two diagonal struts (12) crossed in an X pattern can be arranged between two adjacent, horizontally-running struts (11), arranged on one side of the supporting structure (1), and/or two adjacent struts (2), arranged on the same side, of different strut pairs (4a, 4b, 4c, 4d, 4e).

15. A supporting structure (1) according to any one of the preceding claims,
**characterized by** a plurality of foot elements (8a, 8b, 8c, 8d, 8e), preferably three, four, five or six, arranged substantially parallel to one another, anchorable to the sea bed and connectable to the lowermost ring structure (5a); and/or the struts of the supporting structure (1) are in the form of HFI (high-frequency induction welding) tubes and/or MSH (Mannesmann steel hollow section) tubes; and/or the struts are connectable to one another by orbital welding; and/or the supporting structure (1) has an interface (18) for mounting a tower of a wind energy installation; and/or the struts have a wall thickness of up to approximately 30 mm, preferably approximately in the region of 25.4 mm, and/or are manufactured using the hot-rolled wide strip process; and/or the tubes are at least partially coated with a coating, in particular coated with a plastic material.

## Revendications

1. Structure porteuse (1) pour installations offshore, en particulier pour éoliennes, destinée à être ancrée au niveau du fond de la mer, constituée d'une pluralité d'entretoises reliées les unes aux autres, sachant qu'au moins deux entretoises (2a, 2b) essentiellement verticales ou inclinées selon un angle allant de 0 degré à 30 degrés par rapport à une verticale sont essentiellement disposées de manière parallèle les unes aux autres,
**caractérisée en ce que** les entretoises (2a, 2b) disposées essentiellement de manière parallèle les unes aux autres sont composées de plusieurs entretoises individuelles (2a1, 2a2, 2a3, 2a4) décalées en direction d'un axe longitudinal.

2. Structure porteuse (1) selon la revendication 1,
**caractérisée en ce que** les entretoises reliées les unes aux autres présentent essentiellement une structure de type treillis.

3. Structure porteuse (1) selon la revendication 1 ou 2,
**caractérisée en ce que** les entretoises (2a, 2b) disposées essentiellement de manière parallèle les unes aux autres sont composées de deux, trois ou quatre entretoises individuelles (2a1, 2a2, 2a3, 2a4) décalées dans la direction d'un axe longitudinal.

4. Structure porteuse (1) selon l'une quelconque des revendications précédentes,
**caractérisée en ce que** respectivement deux entretoises (2a, 2b) disposées essentiellement de manière parallèle l'une à l'autre forment une paire d'entretoises (4a, 4b, 4c, 4d, 4e).

5. Structure porteuse (1) selon la revendication 4,
**caractérisée en ce qu'**une paire d'entretoises (4a, 4b, 4c, 4d, 4e) présente essentiellement la même longueur que la structure porteuse (1), et/ou
**en ce que** la structure porteuse (1) présente plusieurs paires d'entretoises (4a, 4b, 4c, 4d, 4e), de préférence trois, quatre, cinq ou six, disposées dans la zone extérieure de manière homogène sur la périphérie, et/ou
**en ce que** la structure porteuse (1) présente de préférence au niveau de chaque arête extérieure une paire d'entretoises (4a, 4b, 4c, 4d, 4e).

6. Structure porteuse (1) selon la revendication 4,
**caractérisée en ce que** les deux entretoises (2a, 2b), disposées essentiellement de manière parallèle les unes aux autres d'une paire d'entretoises (4a, 4b, 4c, 4d, 4e) peuvent être reliées au moyen d'une ou de plusieurs entretoises de liaison (10) disposées essentiellement de manière horizontale.

7. Structure porteuse (1) selon la revendication 6,
**caractérisée en ce que** les entretoises de liaison (10) s'étendant de manière horizontale présentent une incurvation autour de l'axe central vertical de la structure porteuse (1), et/ou
**en ce que** les entretoises de liaison (10) s'étendant de manière horizontale présentent une incurvation de 120 degrés, 90 degrés, 72 degrés ou 60 degrés autour de l'axe central vertical de la structure porteuse (1).

8. Structure porteuse (1) selon l'une quelconque des revendications 4 à 7,
**caractérisée en ce que** la structure porteuse (1) présente plusieurs paires d'entretoises (4a, 4b, 4c, 4d, 4e), de préférence trois, quatre, cinq ou six.

9. Structure porteuse (1) selon l'une quelconque des revendications 4 à 8,
**caractérisée en ce que** les paires d'entretoises (4a, 4b, 4c, 4d, 4e) peuvent être reliées par des entretoises (11) s'étendant essentiellement de manière horizontale.

10. Structure porteuse (1) selon la revendication 9,
**caractérisée en ce que** les entretoises de liaison (10) disposées dans un plan commun et les entretoises (11) disposées dans le même plan s'étendant essentiellement de manière horizontale forment une structure annulaire (5a, 5b, 5c, 5d) essentiellement horizontale.

11. Structure porteuse (1) selon l'une quelconque des revendications précédentes,
**caractérisée en ce que** les entretoises sont réalisées sous la forme de tubes.

12. Structure porteuse (1) selon la revendication 10 ou 11,
**caractérisée en ce que** la structure porteuse (1) présente plusieurs segments (6a, 6b, 6c, 6d) superposés, de préférence un, deux, trois ou quatre, lesquels sont délimités par les structures annulaires (5a, 5b, 5c, 5d) dans la direction verticale.

13. Structure porteuse (1) selon l'une des revendications 4 à 12,
**caractérisée en ce que** les paires d'entretoises (4a, 4b, 4c, 4d, 4e) peuvent être reliées par des entretoises diagonales (12) s'étendant essentiellement de manière diagonale.

14. Structure porteuse (1) selon la revendication 13,
**caractérisée en ce que** deux entretoises diagonales (12) croisées selon un modèle X peuvent être disposées entre deux entretoises (11) adjacentes disposées sur un côté de la structure porteuse (1) s'étendant de manière horizontale et/ou deux entretoises (2) adjacentes disposées sur le même côté, de différentes paires d'entretoises (4a, 4b, 4c, 4d, 4e).

15. Structure porteuse (1) selon l'une des revendications précédentes,
**caractérisée par** plusieurs éléments de pieds (8a, 8b, 8c, 8d, 8e), de préférence trois, quatre, cinq ou six, pouvant être ancrés dans le fond de la mer, pouvant être reliés à la structure porteuse (5a) la plus profonde, disposés essentiellement de manière parallèle les uns aux autres, et/ou
en ce que les entretoises de la structure porteuse (1) sont réalisées sous la forme de tubes à soudage à induction à haute fréquence et/ou de tubes à profil creux à structure métallique Mannesmann, et/ou
en ce que les entretoises peuvent être reliées les unes aux autres au moyen d'un soudage orbital, et/ou
en ce que la structure porteuse (1) présente une interface (18) servant au montage d'une tour d'une éolienne, et/ou
en ce que les entretoises présentent une épaisseur de paroi pouvant aller jusqu'à environ 30 mm, de préférence située autour de 25,4 mm, et/ou sont fabriquées lors d'un processus de larges feuillards à chaud, et/ou
en ce que les tubes sont enduits au moins en partie d'un revêtement, en particulier d'une matière plastique.
